Europäisches Patentamt

(19) **European Patent Office**

**Office européen des brevets**

(11) Numéro de publication: **0 104 216**
**B1**

(12) **FASCICULE DE BREVET EUROPEEN**

(45) Date de publication du fascicule du brevet:
**07.01.87**

(21) Numéro de dépôt: **83901080.8**

(22) Date de dépôt: **31.03.83**

(86) Numéro de dépôt international:
**PCT/FR 83/00062**

(87) Numéro de publication internationale:
**WO 83/03389 (13.10.83** Gazette **83/24)**

(51) Int. Cl.⁴: **B 60 B 27/02,** B 60 B 1/02,
B 60 B 31/02

(54) **MOYEU ELASTIQUE POUR ROUE A RAYONS DE BICYCLE.**

(30) Priorité: **01.04.82 FR 8205994**

(43) Date de publication de la demande:
**04.04.84 Bulletin 84/14**

(45) Mention de la délivrance du brevet:
**07.01.87 Bulletin 87/2**

(84) Etats contractants désignés:
**AT BE CH DE FR GB LI NL SE**

(56) Documents cités:
**DE - A - 2 927 138**
**FR - A - 1 267 226**
**GB - A - 581 845**

(73) Titulaire: **BG TECHNIC SARL, Charvonnex,**
**F-74370 Pringy (FR)**

(72) Inventeur: **GUILLERMIER, Bernard, Route de Provence,**
**F-74330 Epagny (FR)**

(74) Mandataire: **de Beaumont, Michel, Cabinet**
**Poncet 7, chemin de Tillier B.P. 317, F-74008 Annecy**
**Cédex (FR)**

## Description

La présente invention concerne les moyeux de roues à rayons de bicycle. De tels moyeux comportent généralement un axe central cylindrique ou corps de moyeu, limité à ses deux extrémités par deux flasques sensiblement perpendiculaires. Chacun des flasques comprend une couronne de trous pour recevoir les extrémités des rayons reliant le moyeu à la jante de la roue et est réalisé d'une matière élastiquement déformable. Les rayons comprennent une tige rectiligne dont une extrémité est recourbée sensiblement à angle droit pour se terminer par une tête. Dans la couronne de trous, les rayons sont introduits par leur tige alternativement d'une côté et de l'autre du flasque, les têtes venant se bloquer à l'entrée des trous.

Les moyeux utilisés jusqu'à ce jour sont réalisés en métal ou en matières à haute résistance mécanique de façon à supporter les efforts de traction exercés par les rayons. On a jusqu'à ce jour cherché à réaliser des moyeux très solides et rigides, dans le but d'éviter toute déformation ultérieure de la roue.

Le brevet GB-A-13 712 décrit un moyeu réalisé par assemblage de deux pièces métalliques embouties comprenant chacune un flasque.

Dans le brevet FR-A-663 982, le moyeu est réalisé par emboitage et soudage de deux flasques métalliques (4) sur un cylindre central (2). Des roulements coniques (80) sont protégés par des joints d'étanchéité élastiques (18) pincés entre deux rondelles (15, 16).

Certaines realisations associent des parties en métal et des parties en une autre matière telle que le plastique ou le caoutchouc.

Ainsi dans le brevet GB-A-581 845, des flasques métalliques sont solidaires d'un cylindre extérieur (17) entourant un manchon en matière élastique (18) assurant une liaison élastique avec un cylindre intérieur (14) portant l'axe (12). Il s'agit donc d'un moyeu rigide (17) monté élastiquement sur son axe.

Le brevet DE-A-2 927 138 décrit un moyeu dans lequel deux flasques métalliques (12) sont emmanchés en bout d'une partie centrale (10) en matière plastique portant les roulements.

Dans le brevet DE-C-717 520, des parties métaliques (5a, 6a, 7a) formant l'âme du moyeu sont surmoulées dans une résine phénolique évitant la corrosion.

Dans la demande de brevet FR-A-2 240 115, le corps de moyeu (10), comportant les flasques (50), est entièrement réalisé en une résine thermoplastique «Valex 420» choisie pour sa légèreté, sa non corrosion, son autolubrification et sa rigidité.

Dans le brevet français FR-A-1 267 226, on réalise tout le moyeu (1) en une seule pièce de matière plastique à haute résistance mécanique et faible coefficient de frottement. On mentionne l'utilisation possible de «polyamides ou de super polyamides». Pour augmenter la résistance mécanique des flasques, on suggère de ménager des renforts (4'b) autour des trous ou en pourtour (4"b) de flasque, le but étant manifestement d'éviter ruptures et déformations.

Ces techniques traditionnelles présentent notamment l'inconvénient de rendre difficile l'équilibrage de la roue, cet équilibrage étant réalisé par serrage des écrous de rayons sur la jante de la roue. En effet, lors du montage, dans les techniques traditionnelles, les rayons sont entrecroisés et se chevauchent régulièrement dans un ordre déterminé entre le moyeu et la jante de la roue. Les frottements inévitables aux points de croisement impliquent qu'il est peu probable qu'au montage, lorsque la roue devient rectifiée, les tensions des rayons soient égales; puis, à l'usage, les tensions s'égalisent, mais c'est la roue qui se déforme. Ainsi, outre le fait que la rectifications est rendue difficile par le nombre de rayons à régler, cette rectification est pratiquement impossible à réaliser de façon définitive immédiatement au montage.

Par suite de la rigidité de la jante et des flasques du moyeu, toujours réalisés en matière rigide, un mauvais équilibrage au serrage des écrous de rayons produit sur certains rayons des contraintes importantes non réparties sur les autres rayons: par exemple un serrage excessif d'un écrou fait supporter au rayon correspondant à la fois une contrainte permanente et toutes les surcharges lors de l'utilisation, tandis que les rayons voisins sont détendus et ne participent pas à l'effort. Les risques de rupture sont importants.

La présente invention a notamment pour objet de proposer un moyeu de roue à rayons permettant de faciliter considérablement le réglage et l'équilibrage de la roue, en diminuant notamment l'influence des frottements des rayons au point de croisement, et en assurant une répartition optimale des contraintes mécaniques entre les rayons. On évite ainsi également les cassures de rayons, la charge étant répartie régulièrement entre plusieurs rayons.

Un autre objet de la présente invention est de proposer un moyeu de roue permettant la réalisation de roues à rayons présentant des caractéristiques d'élasticité qui, quoique limitées, augmentent considérablement le confort de l'usager.

Un autre objet de l'invention est de proposer un tel moyeu dont la réalisation soit particulièrement peu onéreuse car obtenue par moulage; les moules utilisés sont particulièrement simples, et comportent des mâchoires à un seul mouvement de sorte que le même moule peut produire plusieurs pièces à la fois.

Un autre objet de l'invention est de proposer un ensemble de pièces de nombre le plus réduit possible et dont l'assemblage permette de réaliser les moyeux des roues avant et arrière.

Un autre objet de l'invention est de proposer un tel moyeu en matière élastique monté sur un axe métallique et dans lequel soient compensés les effets des dilatations différentielles entre l'axe et le moyeu.

Pour ce faire, selon l'invention, la souplesse de la matière élastiquement déformable dont est réalisé chaque flasque du moyeu est telle qu'une traction axiale de 300 Newton environ exercée sur un seul rayon produit un déplacement de la tête de rayon, par rapport à l'axe du moyen, compris entre un et quatre dixièmes de millimètre. Cette souplesse est 20 à 100 fois plus grande que celle présentée par les dispositifs connus mentionnés cidessus. Cette élasticité assure l'équilibrage des efforts mécaniques et leur répartition entre tous les rayons, d'une part lors du montage, et d'autre part lors de l'utilisation ultérieure de la roue. Contrairement aux techniques traditionnelles, on cherche donc à réaliser une roue dont le moyeu est relativement élastique et déformable, cette déformation étant toutefois limitée au seul mouvement d'étirement dans le sens des rayons. On a pu constater que cette élasticité, contrairement à l'enseignement de l'art antérieur, favorise l'équilibrage de la roue, maintient sa géométrie sans déformation permanente, et assure sa longévité, à condition toutefois d'être maintenue dans les limites de valeurs ci-dessus.

Selon une autre caractéristique de l'invention, on réalise les flasques en un polyamide de type Nylon 6–6 comportant une charge de 25 à 35% de fibre de verre et de 15 à 25% de billes de verre fabriqué par la Société LNP.

Le choix de cette matière a notamment nécessité de faire des essais complexes de traction sur des prototypes de moyeux réalisés en plus de quarante matériaux dont quinze parmi les polyamides. En effet les contraintes mécaniques spéciales supportées par les moyeux, dans des conditions de températures et d'humidité difficile, rendaient impossible le choix sur la base des seules caractéristiques fournies par les fabricants de résines synthétiques, qui précisément n'apportaient aucun renseignement sur les propriétés d'un Nylon 6–6 comportant les charges choisies de fibres et billes de verre.

Selon une autre caractéristique de l'invention, le moyeu comprend une première et une seconde pièce en matière plastique comportant chacune un des deux flasques munis de trous; les pièces comportent des parties de profils complémentaires emboîtables l'une dans l'autre, avec friction, dans le sens de l'axe et empêchant toute rotation de l'une par rapport à l'autre. Le moyeu est ainsi réalisé en plusieurs pièces de sorte que le moulage est facilité, et réalisé à l'aide de moules simples. Les techniques de moulage habituelles permettraient bien entendu la réalisation d'un moyeu en une seule pièce, mais nécessiteraient l'utilisation d'un moule à mâchoires latérales associé à des broches rétractables pour la formation des couronnes de trous; les trous étant décalés sur un flasque par rapport à l'autre flasque, le plan de joint du moule devrait passer au quart de la distance de deux trous, ce qui laisse fort peu de place pour les broches et conduit à des moules de réalisation très complexe. En outre, une telle technique ne permettrait pas de réaliser de façon simple la forme spéciale des trous qui sera décrite ci-après.

Selon une autre caractéristique de l'invention, les profils complémentaires des deux pièces formant le moyeu sont dissymétriques pour ne permettre l'emboîtement des deux pièces que dans un nombre de positions angulaires limité. On facilite ainsi le montage quel que soit le nombre de trous de la couronne du moyeu, en assurant automatiquement le décalage des trous d'un flasque à l'autre.

Selon une autre caractéristique de l'invention, la première pièce est réalisée par assemblage d'un manchon et d'une première moitié de corps de moyeu supportant le flasque, le manchon dépassant du corps du moyeu pour recevoir la seconde pièce par emboîtage. On réduit ainsi au minimum le nombre de pièces nécessaires pour la réalisation des moyeux avant et arrière.

Selon une autre caractéristique de l'invention, le manchon est un manchon intérieur et comporte un alésage central axial et une surface extérieure conformée pour recevoir les demi corps de moyeu supportant les flasques. Avec les mêmes demi coprs de moyeu, on peut ainsi réaliser les moyeux avant et arrière par adaptation d'un manchon différent, le manchon arrière devant comporter à l'une de ses extrémités une partie filetée destinée à recevoir la roue libre.

Selon une autre caractéristique de l'invention, le manchon comporte des nervures longitudinales périphériques de section sensiblement demi circulaire, s'engageant dans des rainures longitudinales correspondantes ménagées dans l'alésage central de la première et de la seconde pièce. On réalise ainsi un moyeu dans lequel les deux parties supportant les flasques sont maintenues angulairement très fermement et peuvent supporter des contraintes de torsion importantes, cette réalisation permettant en outre d'éviter les retassures lors de la réalisation des pièces moulées.

Selon une autre caractéristique de l'invention, le manchon comporte un alésage intérieur conformé pour recevoir deux roulements à aiguilles emmanchés en force et recevant l'axe; des butées à billes sont pressées de part et d'autre contre le moyeu par des écrous vissés sur l'extrémité filetée de l'axe, des moyens élastiques étant interposés entre les butées et le corps de moyeu, et un joint d'étanchéité recouvrant la butée. L'emmanchage en force des roulements à aiguilles permet d'éviter l'apparition de jeu lors d'une augmentation de température, sous l'effet des dilatations différentielles du moyeu et des parties métalliques; d'autre part les moyens élastiques interposés entre les butées et le corps de moyeu assurent un centrage et un maintien élastique du moyeu sur l'axe, tout en permettant les dilatations différentielles sans contrainte entre le moyeu et les butées.

Selon une autre caractéristique de l'invention, les faces des flasques sont coniques selon un angle tel que les rayons partent tangentiellement à la surface conique. On élimine ainsi les frottements du rayon contre les flasques pour permettre le libre jeu de l'élasticité du moyeu.

Selon une autre caractéristique de l'invention, les trous comportent deux alésages coniques opposés par leur sommet et débouchant par leur base perpendiculairement à chacune des faces du flasque; l'angle des cônes est choisi de façon que les génératrices les plus proches de l'axe du moyeu soient parallèles à cet axe. Cette disposition permet le démoulage des demi moyeux et donc la réalisation simultanée des trous lors du moulage; en outre on permet ainsi la symétrie de montage des rayons lors de leur introduction alternée de part et d'autre du flasque.

Selon une autre caractéristique de l'invention, les cônes se raccordent aux flasques par une surface arrondie torique dont la section présente un rayon de courbure inférieur au rayon de courbure intérieur du coude de la tige de rayon. Le coude de la tige de rayon vient ainsi reposer contre la surface torique et, sous l'effet d'une traction sur cette tige, écrase localement la surface torique dont l'élasticité s'ajoute aux effets de l'élasticité du flasque lui-même.

D'autres caractéristiques et avantages de la présente invention ressortiront de la description suivante d'un mode de réalisation particulier, faite en relation avec les figures jointes parmi lesquelles:

– la figure 1 représente une vue en coupe longitudinale d'un moyeu avant selon la présente invention;

– la figure 2 représente une vue en coupe longitudinale d'un moyeu arrière selon la présente invention;

– la figure 3 représente une vue en coupe transversale selon l'axe I–I de la figure 1; et

– la figure 4 représente en coupe longitudinale et à grande échelle un mode de réalisation des trous de flasque pour le passage des rayons.

Selon la présente invention, le moyeu de roue à rayons comprend des pièces en matière plastique, et notamment les flasques du moyeu. On utilisera de préférence une matière plastique dont la souplesse est nettement supérieure à celle d'un métal, de façon que les flasques présentent des caractères d'élasticité permettant une légère déformation sous l'action d'une traction effectuée sur les rayons. Pour la réalisation d'une roue de vélo, de soixante dix centimètres de diamètre environ, on a déterminé qu'une déformation élastique entraînant par rapport à l'axe du moyeu un déplacement de un à quatre dixièmes de millimètre de la tête de rayon sous l'action d'une traction axiale de trois cents Newton était suffisante pour présenter tous les avantages de souplesse et d'équilibrage recherchés. Pour une telle réalisation, on pourra prévoir des moyeux en polyamide de type Nylon 6–6, comportant une charge de 25 à 35% de fibre de verre et de 15 à 25% de billes de verre, commercialisé par la Société LNP. Une charge de 30% de fibres de verre et de 20% de billes de verre pourra être préférée.

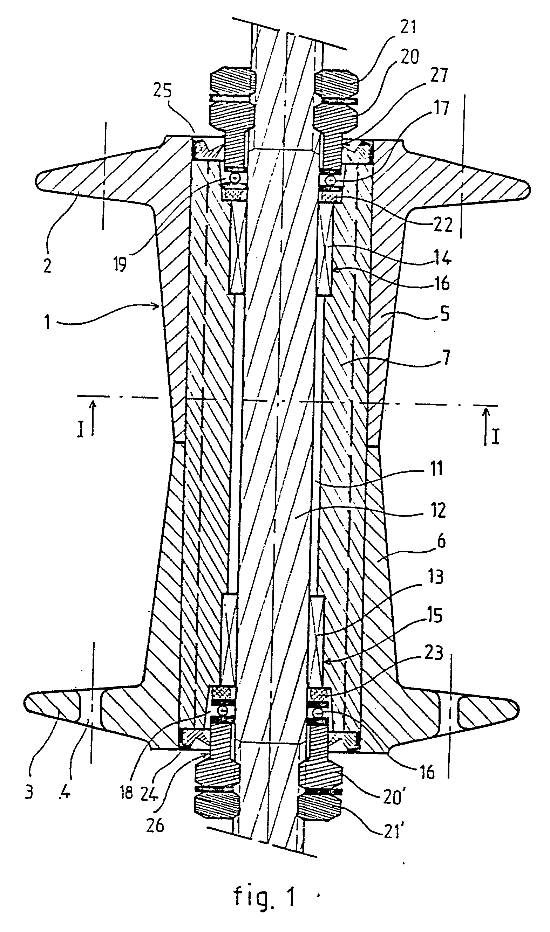

Comme le représentent les figures 1 à 3, le moyeu comprend de façon générale un axe central sensiblement cylindrique ou corps de moyeu 1, limité à ses deux extrémités par deux flasques perpendiculaires 2 et 3. Les flasques 2 et 3 comportent une couronne de trous 4 pour l'insertion des rayons.

Dans le mode de réalisation représenté sur les figures, le moyeu est obtenu par assemblage de trois pièces principales: un premier demi corps de moyeu 5 solidaire du flasque 2 et un second demi corps de moyeu 6 solidaire du flasque 3, les deux demi corps 5 et 6 étant emmanchés sur un manchon longitudinal 7. Les demi corps 5 et 6 sont identiques et montés en opposition, comme le représentent les figures; ils comportent un alésage intérieur 8 muni de rainures longitudinales 9 dans lesquelles viennent se loger des nervures 10 de profil correspondant du manchon 7.

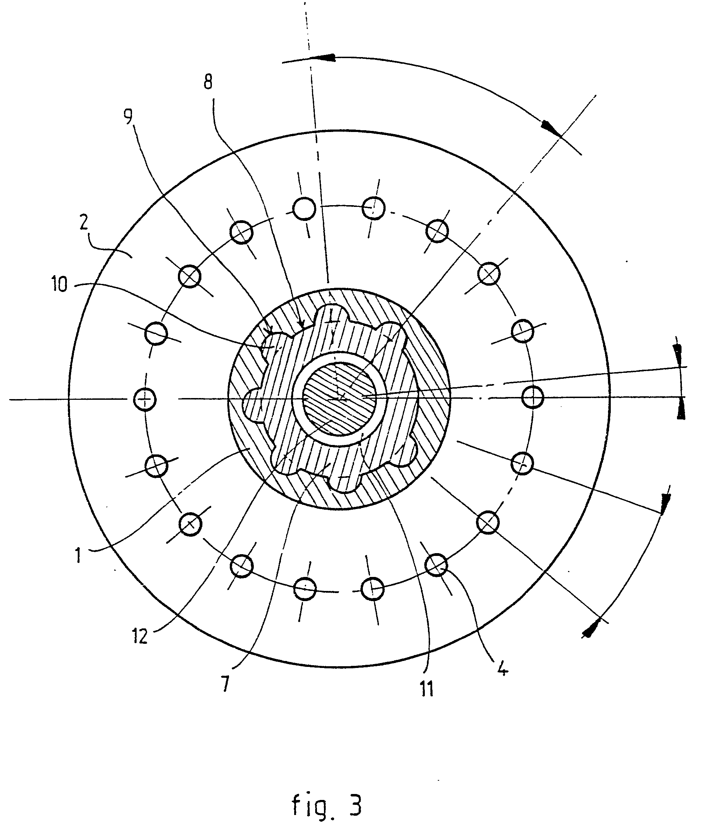

Selon la constitution habituelle des roues à rayons, les trous 4 ménagés sur le flasque 2 sont décalés par rapport aux trous ménagés sur le flasque 3, de sorte que le position angulaire des demi corps 5 et 6 doit être déterminée au montage. Pour cela on donne au manchon 7 et à l'alésage correspondant 8 une forme complémentaire et dissymétrique pour que le montage ne puisse se faire que dans une seule position angulaire. Cette forme dissymétrique peut par exemple être obtenue, comme le représente la figure 3, en ménageant une suite continue de rainures 9 et de nervures 10 régulièrement réparties, une nervure 10 et une rainure 9 correspondant étant supprimées.

Dans le mode de réalisation représenté sur la figure 3, les nervures 10 et rainures 9 ont une section demi circulaire, cette disposition permettant d'éviter l'apparition de retassures lors du moulage.

Le manchon 7 comporte un alésage central longitudinal 11 destiné à recevoir l'axe 12 du moyeu. Le moyeu est centré sur l'axe 12 au moyen de roulement à aiguilles 13 et 14 insérés dans des logements 15 et 16 de l'alésage 11 prévus à cet effet. Les logements 15 et 16 ont une dimension telle que les roulements à aiguilles sont emmanchés en force dans les logements de façon que lors d'une élévation de température la dilatation du manchon 7 ne produise pas son décollement des roulements 14 et 13.

Le moyeu est maintenu axialement par deux butées à billes 16 et 17 insérées dans un logement respectivement 18 et 19 du manchon 7 comme le représentent les figures; un ensemble d'écrous 20 et contre-écrous 21 vissés sur l'axe 12 repousse les butées 17 et 16 vers le centre du moyeu, des cales élastiques 22 et 23 étant interposées entre les butées 17 et 16 et le fond de logement 19 et 18 correspondant pour assurer un maintien élastique en position centrée du moyeu sur l'axe. Des joints d'étanchéité 24 et 25 assurent l'étanchéité de l'ensemble et viennent en appui sur une portion cylindrique extérieure 26 et 27 des écrous 20 et 20'.

Sur la figure 1 on a représenté un moyeu pour roue avant de vélo, dans lequel les deux extrémités du moyeu sont identiques.

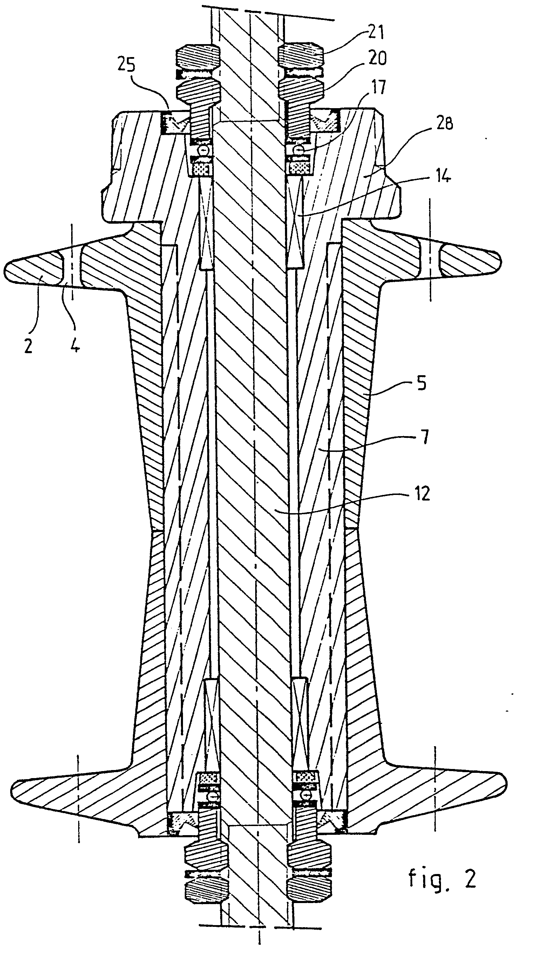

Sur la figure 2, on a représenté un moyeu pour roue arrière de vélo: dans ce cas le manchon 7 comporte à l'une de ses extrémités une tête filetée 28, sortant à l'extérieur du corps de moyeu, et destinée à recevoir la roue libre. Les autres pièces du dispositif sont les mêmes que celles du moyeu de roue avant. Ainsi, on réalise les moyeux de roue arrière et de roue avant avec trois types de pièces principales: un demi corps de moyeu avec flasque, un manchon pour roue avant et un manchon avec tête 28 pour roue arrière.

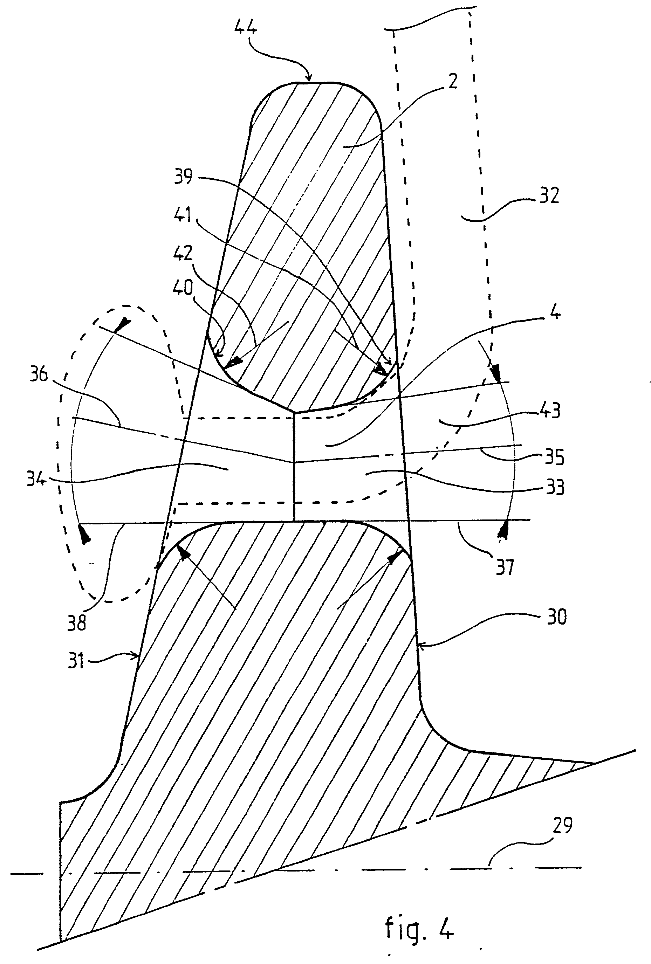

La figure 4 représente le détail de forme des trous et des flasques dans ce mode de réalisation. Par rapport à la direction axiale du moyeu, représentée par la ligne 29, le flasque 2 est limité par deux faces coniques 30 et 31. La face intérieure 30, disposée du côté du centre du moyeu, a son sommet de cône dirigé vers le centre du moyeu et, pour une roue de vélo de soixante dix centimères de adimètre environ, un angle de cône de cent soixante douze degrés environ. Ainsi, la tige de rayon 32 sortant du trou 4, qui fait un angle sensiblement égal à quatre vingt six degrés avec la direction axiale 29, est sensiblement parallèle à la face 30.

La face extérieure 31 du flasque, ou face tournée vers l'extérieur du moyeu, est également conique, le sommet du cône étant tourné vers l'extérieur du moyeu. Pour un moyeu de roue de vélo de soixante dix centimètres de diamètre environ, l'angle au sommet du cône de la face extérieure 31 sera voisin de cent cinquante six degrés; en effet, la tige de rayon sortant du trou par la face 31 fait habituellement avec la direction axiale 29 un angle voisin de soixante dix huit degrés, de sorte que cette tige se trouve parallèle à la face 31.

Le trou 4 comporte deux parties évasées opposées, une partie 33 débouchant sur la face intérieure 30 et une partie 34 débouchant sur la face extérieure 31. Pour simplifier la réalisation des moules, on pourra prévoir des parties 33 et 34 tronconiques, comme le représente la figure, la partie 33 admettant un axe 35 de symétrie perpendiculaire à la face 30, la partie 34 admettant un axe de symétrie 36 perpendiculaire à la face 31. Les angles d'ouverture des cônes des parties 33 et 34 sont choisis de façon que les génératrices, respectivement 37 et 38, les plus proches de l'axe 29 du moyeu soient parallèles à cet axe pour faciliter le démoulage de la pièce. Les parties tronconiques 33 et 34 se raccordent aux faces 30 et 31 par une surface arrondie. Pour la facilité de réalisation du moule, on pourra prévoir dans la partie 33 une surface arrondie torique 39, et pour la partie 34 une surface arrondie torique 40, ces deux surfaces 39 et 40 ayant une section présentant un rayon 41 et 42 inférieur au rayon de courbure intérieur du coude 43 de la tige 32 de rayon.

La réalisation par moulage des pièces précédemment décrites peut être éffectuée à l'aide de moules simples: les demi corps de moyeu avec flasque seront de préférence réalisés dans un moule dont le plan de joint passe par la tranche 44 des flasques, les deux mâchoires du moule s'ouvrant et se refermant dans le sens axial de la ligne 29.

Le mode de réalisation ci-dessus est prévu pour une roue de vélo de soixante dix centimètres de diamètre environ, et dont les couronnes de trous comportent dix huit trous. Les angles et dispositions relatives décrites devront être bien entendu adaptés lors de la réalisation de trous de diamètre différent ou comportant un nombre de rayons différent.

En outre, selon un autre mode de réalisation, on pourra prévoir un demi corps de moyeu solidaire d'un manchon dépassant partiellement du corps de moyeu et sur lequel vient s'adapter le second demi corps de moyeu lors du montage.

Dans la description qui précède, le moyeu comporte deux types d'éléments assurant un maintien élastique des rayons en les rappelant vers l'intérieur à l'encontre d'une traction exercée sur leur tige vers l'extérieur: un premier moyen est la matière constituant le flasque lui-même, matière plastique élastique qui permet une déformation du flasque et un éloignement du trou 4 sous l'action d'une traction exercée sur le rayon; un second moyen est la différence de courbure entre les surfaces toriques 39 et 40 et le coude 43 du rayon: le coude 43 de rayon est en appui sur une portion seulement de la surface torique 39 ou 40, de sorte qu'une traction sur la tige 32 de rayon produit un écrasement localisé de la surface torique 39, écrasement assurant une relative souplesse. Dans le mode de réalisation représenté sur les figures, le rayon 41 est sensiblement égal aux trois quarts du rayon de courbure intérieur du coude 43.

La présente invention n'est pas limitée aux modes de réalisation qui ont été explicitement décrits, mais elle en inclut les diverses variantes et généralisations contenues dans le domaine des revendications ci-après. On pourra notamment remplacer les roulements à aiguilles avec butées à billes par toutes autres formes de roulement adaptées éventuellement à d'autre dispositifs de compensation de dilatation.

**Revendications**

1. Moyeu de roue à rayons de bicycle, comprenant un corps de moyeu (1) axial limité à ses deux extrémités par deux flasques (2, 3) sensiblement perpendiculaires comportant chacun une couronne de trous (4) pour recevoir les têtes de rayons reliant le moyeu à la jante de la roue, les flasques (2, 3) étant réalisés en une matière élastiquement déformable caractérisé en ce que la souplesse de cette matière est telle qu'une traction axiale de 300 Newton environ exercée sur un seul rayon produit un déplacement de la tête de rayon, par rapport à l'axe du moyeu, compris entre un et quatre dixièmes de millimètre.

2. Moyeu selon la revendication 1, caractérisé en ce que les flasques sont réalisés en un polyamide de type Nylon 6-6 comportant une charge de 25 à 35% de fibres de verre et 15 à 25% de billes de verre.

3. Moyeu selon la revendication 2, caractérisé en ce qu'il comprend une première et une seconde pièce (5, 6) en matière plastique comportant chacune un des deux flasques muni de trous, les pièces comportant des parties de profils complémentaires emboîtables avec friction dans le sens de l'axe et empêchant toute rotation de l'une par rapport à l'autre.

4. Moyeu selon la revendication 3, caractérisé en ce que les profils complémentaires sont dissymétriques pour ne permettre l'emboîtement que dans un nombre de positions angulaires limité.

5. Moyeu selon l'une des revendications 3 ou 4, caractérisé en ce que la première pièce est réalisée par assemblage d'un manchon (7) et d'une première moitié de corps de moyeu solidaire d'un flasque, le manchon dépassant du corps de moyeu pour recevoir la seconde pièce par emboîtage.

6. Moyeu selon la revendication 5, caractérisé en ce que le manchon (7) est intérieur et comporte un alésage central axial (11) et une surface extérieure conformée pour recevoir les demi corps (5, 6) de moyeux supportant les flasques, de sorte que pour la réalisation d'un moyeu à roue libre, le manchon (7) peut comporter à l'une des ses extrémités une tête filetée (28) destinée à recevoir la roue libre.

7. Moyeu selon la revendication 6, caractérisé en ce que le manchon comporte des nervures longitudinales (10) périphériques de section sensiblement demi circulaire, s'engageant dans des rainures longitudinales (9) correspondantes ménagées dans l'alésage central de la première et de la seconde pièce.

8. Moyeu selon l'une des revendications 6 ou 7, caractérisé en ce que le manchon (7) comporte un alésage intérieur (11) conformé pour recevoir deux roulements à aiguilles (13, 14) emmanchés en force et recevant l'axe (12), des butés àbilles (16, 17) étant pressées de part et d'autre et contre le moyeu par des écrous (20, 20') vissés sur l'extrémité filetée de l'axe (12), des cales élastiques (22, 23) étant interposées entre les butées et le corps de moyeu, et un joint d'étanchéité (24, 25) recouvrant la butée.

9. Moyeu selon l'une quelconque des revendications 1 à 8, caractérisé en ce que les faces (30, 31) des flasques sont coniques selon un angle tel que les rayons partent tangentiellement à la surface conique.

10. Moyeu selon l'une quelconque des revendications 2 à 9, caractérisé en ce que les trous (4) comportent deux parties tronconiques (33, 34) opposées par leur sommet, débouchant par leur base perpendiculairement à chacune des faces du flasque, l'angle des cônes étant choisi de façon que les génératrices (37, 38) les plus proches de l'axe (12) du moyeu soient parallèles à cet axe.

11. Moyeu selon la revendication 10, caractérisé en ce que les parties coniques (33, 34) se raccordent aux faces (30, 31) par une surface arrondie torique (39, 40) dont la section présente un rayon (41, 42) inférieur au rayon de courbure intérieur du coude (43) de la tige de rayon.

## Patentansprüche

1. Speichenrad-Radnabe eines Zweirads, die einen Nabenkörper (1) aufweist, der axial an seinen beiden Enden durch zwei im wesentlichen senkrechte Flansche (2, 3) begrenzt ist, die jeweils einen Kranz Löcher (4) tragen zum Aufnehmen der Köpfe von Speichen, die die Nabe mit der Felge des Rades verbinden, wobei die Flansche (2, 3) aus einem elalstischen deformierbaren Material ausgeführt sind, dadurch gekennzeichnet, dass die Biegsamkeit dieses Materials so ist, dass ein axialer Zug von ungefähr 300 Newton, der auf eine einzelne Speiche ausgeübt wird, einen Versatz des Speichenkopfes in Bezug auf die Achse der Nabe erzeugt, der zwischen ein und vier Zehntel Millimetern liegt.

2. Nabe nach Anspruch 1, dadurch gekennzeichnet, dass die Flansche aus einem Polyamid des Typs Nylon 6–6 ausgeführt sind, das einen Füllstoff von 25 bis 35% Glasfasern und von 15 bis 25% Glaskugeln enthält.

3. Nabe nach Anspruch 2, dadurch gekennzeichnet, dass sie ein erstes und ein zweites Teil (5, 6) aus Kunststoffmaterial aufweist, die jeweils eine der beiden mit Löchern versehenen Flansche tragen, wobei die Teile komplementäre, in Richtung der Achse mit Reibung verzapfbare und jede Drehung des einen gegenüber dem anderen Teil verhindernde Profilteile aufweisen.

4. Nabe nach Anspruch 3, dadurch gekennzeichnet, dass die komplementären Profile unxymmetrisch sind, um die Verzapfung nur in einer begrenzten Anzahl von Winkellagen zu erlauben.

5. Nabe nach einem der Ansprüche 3 oder 4, dadurch gekennzeichnet, dass das erste Teil durch die Verbindung einer Muffe (7) und einer ersten Hälfte des Nabenkörpers, der einteilig mit einem Flansch ist, ausgeführt ist, wobei die Muffe aus dem Nabenkörper hervorragt, um das zweite Teil durch Ineinandergreifen aufzunehmen.

6. Nabe nach Anspruch 5, dadurch gekennzeichnet, dass die Muffe (7) im Inneren ist und eine zentrale axiale Bohrung (11) und eine äussere Oberfläche aufweist, die gestaltet ist, um die Halbkörper (5, 6) der Nabe, die die Flansche tragen, aufzunehmen, in der Art, dass für die Ausbildung einer Nabe eines freien Rades die Muffe (7) an einer ihrer Enden einen Gewindekopf (28) aufweist, der dazu bestimmt ist, dass freie Rad aufzunehmen.

7. Nabe nach Anspruch 6, dadurch gekennzeichnet, dass die Muffe längliche Oberflächenleisten (10) mit im wesentlichen halbkreisförmigen Querschnitt aufweist, die mit entsprechenden Längsnuten (9) in Eingriff stehen, die in der zentralen Bohrung des ersten und des zweiten Teiles ausgespart sind.

8. Nabe nach einem der Ansprüche 6 oder 7, dadurch gekennzeichnet, dass die Muffe (7) eine innere Bohrung (11) aufweist, die zur Aufnahme von zwei Nadellagern (13, 14) gebildet ist, die mit Kraft eingepresst sind und die Achse (12) aufnehmen, wobei Kugeldrucklager (16, 17) beiderseits und gegen die Nabe durch Schraubenmuttern (20, 20') gepresst werden, die auf das Gewindeende der Achse (12) geschraubt sind, elastische Einlagen (22, 23) zwischen die Lager und den Nabenkörper gelegt sind und eine Abdichtverbindung (24, 25) das Lager verdeckt.

9. Nabe nach irgendeinem der Ansprüche 1 bis 8, dadurch gekennzeichnet, dass die Oberflächen (30, 31) der Flansche konisch sind gemäss einem Winkel, so dass die Speichen tangential zur konischen Oberfläche ausgehen.

10. Nabe nach irgendeinem der Ansprüche 2 bis 9, dadurch gekennzeichnet, dass die Löcher (4) zwei kegelstumpfartige Teile (33, 34) aufweisen, die sich über ihre Spitze gegenüber stehen, die über ihre Basis senkrecht in jede der Oberflächen des Flansches münden, wobei der Winkel der Koni in der Art gewählt ist, dass die Mantellinien (37, 38), die am dichtesten an der Achse (12) der Nabe sind, parallel zu dieser Achse sind.

11. Nabe nach Anspruch 10, dadurch gekennzeichnet, dass die konischen Teile (33, 34) sich an die Oberflächen (30, 31) annähern durch eine abgerundete toroidförmige Oberfläche (39, 40), deren Querschnitt einen Radius (41, 42) darstellt, der kleiner ist als der innere Kurvenradius der Biegung (43) der Speiche.

## Claims

1. Spoke wheel hub of bicycle, comprising an axial hub body (1) limited at both its ends by two substantially perpendicular flanges (2, 3) each comprising a ring of holes (4) for receiving the heads of spokes connecting the hub to the rim of the wheel, the flanges (2, 3) being made from an elastically deformable material, characterized in that hte flexibility of said material is such that an axial tractive force of about 300 Newton exerted on a single spoke produces a movement of the spoke head, with respect to the axis of the hub, between one and four tenths of a millimeter.

2. Hub according to claim 1, characterized in that the flanges are made from a polyamide of Nylon 6–6 type comprising a charge of 25 to 35% of glass fibers and 15 to 25% of glass balls.

3. Hub according to claim 2, characterized in that it comprises a first and second piece (5, 6) made from a plastic material each comprising one of the two flanges provided with holes, the pieces comprising parts with complementary profiles able to be assembled with a friction fit in the direction of the axis and preventing any rotation of one with respect to the other.

4. Hub according to claim 3, characterized in that the complementary profiles are dissymetrical so as to allow fitting only in a limited number of angular positions.

5. Hub according to one of claims 3 or 4, characterized in that the first piece is formed by assembly of a sleeve (7) and a first hub body half integral with a flange, the sleeve projecting from the hub body for receiving the second piece by a socket joint.

6. Hub according to claim 5, characterized in that the sleeve (7) is internal and comprises a central axial bore (11) and an outer surface shaped so as to receive the half hub bodies (5, 6) supporting the flanges, so that for the construction of a free wheel hub, the sleeve (7) may comprise at one of its ends a threaded head (28) intended to receive the free wheel.

7. Hub according to claim 6, characterized in that the sleeve comprises longitudinal peripheral ribs (10) substantially semi-circular in section, engaging in corresponding longitudinal grooves (9) provided in the central bore of the first and of the second piece.

8. Hub according to one of claims 6 or 7, characterized in that the sleeve (7) comprises an inner bore (11) adapted to receive two force fitted needle bearings (13, 14) receiving the spindle (12), ball thrust bearings (16, 17) being pressed on each side and against the hub by nuts (20, 20') screwed on to the threaded end of the spindle (12), elastic shims (22, 23) being interpositioned between the thrust bearings and the hub body, and a seal (24, 25) covering the thrust bearing.

9. Hub according to any one of claims 1 to 8, characterized in that the faces (30, 31) of the flanges are conical forming an angle such that the spokes extend tangentially to the conical surface.

10. Hub according to any one of claims 2 to 9, characterized in that the holes (4) comprise two truncated cone shaped parts (33, 34) opposed by their apex, opening at their base perpendicularly to each of the faces of the flange, the angle of the cones being chosen so that the generatrices (37, 38) the closest to the spindle (12) of the hub are parallel to this spindle.

11. Hub according to claim 10, characterized in that the conical parts (33, 34) are joined to the faces (30, 31) by a rounded toric surface (39, 40) whose section presents a radius (42, 42) less than the inner radius of curvature of the bend (43) of the spoke rod.

1 / 4

fig. 1

fig. 2

3 / 4

fig. 3

fig. 4